# EUROPÄISCHE PATENTSCHRIFT

(11) **EP 1 385 237 B1**
(45) Veröffentlichungstag und Bekanntmachung des Hinweises auf die Patenterteilung: **29.12.2004**
(21) Anmeldenummer: 03016112.9
(22) Anmeldetag: 16.07.2003
(51) Int. Cl.: H01R 29/00

(54) **Stromversorgungseinrichtung für einen Wohnwagen**
Power supply assembly for a caravan
Dispositif d'alimentation électrique pour une caravane

(30) Priorität: 24.07.2002 DE 10233691
(43) Veröffentlichungstag der Anmeldung: 28.01.2004
(73) Patentinhaber: Trautmann GmbH & Co.KG Calira-Apparatebau, 87600 Kaufbeuren (DE)
(72) Erfinder: Trautmann, Manfred, 87600 Kaufbeuren (DE); Kunz, Franz, 87600 Kaufbeuren (DE)
(74) Vertreter: Rapp, Bertram, Dr.

(56) Entgegenhaltungen:
- EP-A- 0 310 965
- EP-A- 0 495 388
- US-A- 5 442 170
- US-A- 5 777 396

## Beschreibung

Die Erfindung betrifft eine Stromversorgungseinrichtung für einen Wohnwagen nach dem Oberbegriff des Patentanspruchs 1 und ein zur Kombination mit dieser bestimmtes Ausbaumodul.

Derartige Einrichtungen gehören heute zur Standardausstattung von Wohnwagen, um bei Verfügbarkeit eines 230V-Netzanschlusses, z. B. auf Campingplätzen, die Speisung von 12V-Gleichstromverbrauchem aus dem 230V-Wechselstromnetz zu ermöglichen. Üblicherweise liefern solche Versorgungseinrichtungen nur eine ungesiebte Ausgangsspannung, so daß keine elektronisch gesteuerten Geräte (Heizung, Kühlschrank und dergleichen) angeschlossen werden können. Sie beinhalten ferner einen Transformator, wodurch sich vor allem im höheren Leistungsbereich (über 100W) Gewichtsprobleme beim mechanischen Aufbau ergeben. Wenn kein Netzanschluß verfügbar ist, können die Gleichstromverbraucher des Wohnwagens in Grundsatz auch aus der Fahrzeugbatterie des Zugfahrzeugs gespeist werden, wozu es bekannt ist, einen entsprechenden Umschalter vorzusehen. Diese Versorgung aus der Fahrzeugbatterie ist aber nur in sehr begrenztem Umfang möglich, da eine zu starke Entladung der Fahrzeugbatterie die Startfähigkeit des Zugfahrzeugs in Frage stellen würde.

Um die Gleichstromverbraucher eines Wohnwagens über längere Zeit autark, d.h. unabhängig von einem Netzanschluß betreiben zu können, wird deshalb im Wohnwagen eine eigens dafür vorgesehene Versorgungsbatterie benötigt. Eine solche kann aber nicht einfach an das von einem herkömmlichen Netzteil gespeiste 12V-Bordnetz des Wohnwagens angeschlossen werden, sondern es wird zum Laden ein Ladegerät mit einem Regler benötigt, der den Ladezustand der Versorgungsbatterie überwacht und abhängig von diesem die Ladespannung bzw. den Ladestrom einstellt. Da eine solche autarke Versorgung aufwendiger ist, aber von den meisten Benutzern nicht benötigt wird, gehört zur Standardausstattung eines Wohnwagens nur die eingangs erwähnte netzabhängige Stromversorgung.

Wenn nun ein Wohnwagen von netzabhängiger auf autarke Versorgung umgerüstet werden soll, ist dies nicht nur mit dem Einbau zusätzlicher Komponenten, sondern auch mit umfangreichen Änderungen an der Verkabelung verbunden, die nur vom Hersteller und in eingeschränktem Umfang von Händlern, aber aus Sicherheitsgründen nicht vom Benutzer selbst durchgeführt werden können. Deshalb ist eine solche Umrüstung mit relativ hohen Kosten verbunden.

Angesichts dieses Standes der Technik liegt der Erfindung die Aufgabe zugrunde, eine Stromversorgungseinrichtung für einen Wohnwagen bereitzustellen, die ausgehend von einer netzabhängigen Versorgung mit möglichst geringem Aufwand den Anschluß anderer elektrischer Energiequellen erlaubt.

Diese Aufgabe wird erfindungsgemäß durch eine Stromversorgungseinrichtung mit den Merkmalen des Patentanspruchs 1 und durch ein Ausbaumodul mit den Merkmalen des Patentanspruchs 15, das zur Verbindung mit einem von der Stromversorgungseinrichtung nach Anspruch 1 umfaßten Grundmodul bestimmt ist, gelöst. Vorteilhafte Ausgestaltungen der Erfindung sind in den Unteransprüchen 2 bis 14 bzw. 16 bis 23 angegeben.

Die Erfindung modularisiert die Stromversorgung eines Wohnwagens dahingehend, daß ein Grundmodul weiterhin die Funktion der bisher üblichen Standardausstattung, d.h. der netzabhängigen Versorgung, wahrnimmt, jedoch bereits zum Anbau eines Ausbaumoduls vorgerichtet ist, wobei sich der Umfang der im Grundmodul enthaltenen Zusatzkomponenten auf ein absolutes Minimum, nämlich auf einen Steckverbinder, beschränkt. Auf diesen Steckverbinder ist mindestens eine zur Versorgung der Gleichstromverbraucher nötige Leitung so herausgeführt, daß zum Schließen des die zueinander parallel geschalteten Verbraucher enthaltenden Stromkreises an dem Steckverbinder mindestens eine Brücke eingesteckt werden muß.

Zur Umrüstung auf autarken Betrieb muß lediglich die Brücke entfernt und ein Ausbaumodul angesteckt werden, unter dessen Kontrolle dann der Verbraucherstromkreis steht. Das Ausbaumodul enthält seinerseits einen Anschluß für die Versorgungsbatterie sowie alle weiteren zum autarken Betrieb benötigten Schaltungskomponenten. Zusätzliche Einbauten einzelner Komponenten und/oder Änderungen an der Verkabelung des Wohnwagens erübrigen sich, so daß die Umrüstung ohne weiteres vom Benutzer selbst durchgeführt werden kann.

Durch die Verwendung eines von außen regelbaren Schaltnetzteils im Grundmodul kann die Steckverbindung weiterhin auch dazu benutzt werden, die von dem Netzteil abgegebene Spannung vom Ausbaumodul aus zu regeln, wodurch sich der im Ausbaumodul nötige schaltungstechnische Aufwand zur Laderegelung der Versorgungsbatterie reduziert. Bei dieser Variante sind weitere Leitungen aus dem Grundmodul, d.h. aus dem darin enthaltnen Netzteil, zu dem Steckverbinder herausgeführt und dort ebenfalls durch eine Steckbrücke miteinander verbunden.

Das Ausbaumodul enthält bevorzugt nicht nur einen Anschluß für die Versorgungsbatterie, sondern auch für Solarmodule und für das Bordnetz des Zugfahrzeugs, so daß bei nicht verfügbarem Netzanschluß die Versorgungsbatterie auch durch Solarenergie und/oder durch den Generator des Zugfahrzeugs geladen werden und dadurch ein im engeren Sinne autarker Betrieb gewährleistet werden kann.

Besonders vorteilhaft ist die sensorische Steuerung des Ladevorgangs durch eine im Ausbaumodul vorgesehene Steuerelektronik. Hierdurch kann insbesondere die Batterietemperatur als wichtiger Betriebsparameter der Versorgungsbatterie bei der Einstellung der Ladespannung bzw. des Ladestromes berücksichtigt und darüber hinaus auch die Temperatur der Stromversorgungseinrichtung selbst überwacht werden. Bei zu hohen Temperaturen wird in diesem Fall die Ladeleistung entsprechend reduziert, um eine thermische Überlastung zu vermeiden. Letzteres erlaubt den Betrieb der Stromversorgung ohne Lüfter auch bei größerer Leistung, was im Hinblick auf den störenden Charakter von Lüftergeräuschen in einem Wohnwagen sehr wünschenswert ist.

Durch den Einsatz einer Steuerelektronik auf der Basis eines Mikrocontrollers können in das Ausbaumodul ohne großen Aufwand weitere Funktionen integriert werden. Beispielsweise können weitere Sensoren angeschlossen und deren Meßdaten ebenso wie diejenigen der bereits erwähnten Temperatursensoren für den Benutzer des Wohnwagens auf einer Anzeige ausgegeben werden, die vorteilhaft als optionales drittes Modul über einen externen Datenbus an das Ausbaumodul anschließbar ist.

Obgleich das Ausbaumodul zur Kombination mit dem Grundmodul bestimmt ist, stellt es einen eigenständigen Bestandteil der vorliegenden Erfindung dar, der als solcher unabhängig vom Vorhandensein des Grundmoduls, d.h. allein aufgrund seiner Konzeption zum technischen Zusammenwirken mit dem Grundmodul, unter dem Schutz des Patents stehen soll.

Nachfolgend wird ein Ausführungsbeispiel der Erfindung anhand der Zeichnungen erläutert. In diesen zeigt
- **Fig. 1**: das Blockschaltbild des Grundmoduls einer erfindungsgemäßen Stromversorgung,
- **Fig. 2**: das Blockschaltbild des Ausbaumoduls einer erfindungsgemäßen Stromversorgung,
- **Fig. 3**: den Kennlinienverlauf des in dem Ausbaumodul nach Fig. 2 enthaltenen Ladereglers.

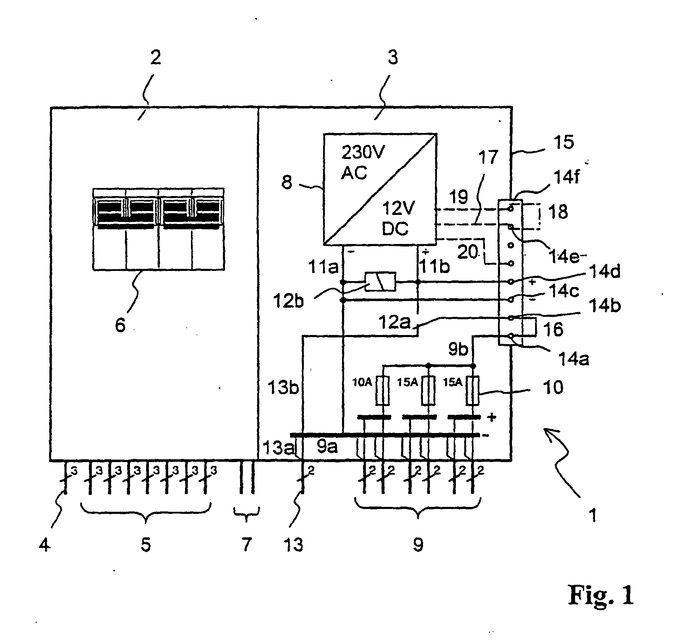

Nach einer Ausführungsform der vorliegenden Erfindung besteht die Standardausstattung der Stromversorgung eines Wohnwagens aus einem in Fig. 1 im Blockschaltbild dargestellten Grundmodul 1, das sich aus einem Wechselstromteil 2 und einem Gleichstromteil 3 zusammensetzt. Zum Wechselstromteil 2 gehört ein 230V-Netzanschluß 4, mehrere Anschlüsse 5 für Wechselstromverbraucher, die über Sicherungen 6 abgesichert sind, sowie ein Potentialausgleichsanschluß 7 zum Anschluß des Wohnwagenchassis an den Schutzleiter des Netzanschlusses 4.

Zum Gleichstromteil 3 gehört ein Netzteil 8, das vorzugsweise als regelbares Schaltnetzteil ausgebildet ist, und die 230V-Netzwechselspannung in 12V-Gleichspannung umformt. Letztere wird über mehrere parallelgeschaltete Anschlüsse 9, die über Sicherungen 10 abgesichert sind, für die Gleichstromverbraucher des Wohnwagens zur Verfügung gestellt. Der Ausgang des Netzteils 8 besteht aus einem Minuspol 11a und einem Pluspol 11b, von denen der Minuspol 11a direkt mit dem gemeinsamen Minuspol 9a der Anschlüsse 9 verbunden ist.

Der Pluspol 11b des Netzteilausgangs 11a, 11b ist mit einem der Schaltkontakte 12a eines Umschaltrelais 12a, 12b verbunden, dessen Spule 12b über dem Netzteilausgang 11a, 11b liegt. An einem weiteren der Schaltkontakte 12a liegt ferner der Pluspol 13b eines Anschlusses 13, über den die Fahrzeugbatterie des Zugfahrzeugs an die Stromversorgung des Wohnwagens anschließbar ist. Der Minuspol 13a dieses Anschlusses 13 ist direkt mit dem gemeinsamen Minuspol 9a der Verbraucheranschlüsse 9 verbunden. Vom dritten der Schaltkontakte 12a, der stets mit einem der beiden anderen verbunden ist und durch die Schaltspule 12b zwischen diesen umgeschaltet wird, führt eine Leitung zu einem Kontakt 14b eines Steckverbinders 14, der in einer Gehäusewand 15 des Grundmoduls 1 angebracht ist. Der gemeinsame Pluspol 9b der Verbraucheranschlüsse 9 ist mit einem benachbarten Kontakt 14a des Steckverbinders 14 verbunden. An dem Steckverbinder 14 sind die Kontakte 14a und 14b durch eine Steckbrücke 16 miteinander verbunden.

Darüber hinaus ist noch der Ausgang 11a, 11b des Netzteils 8 auf zwei benachbarte Kontakte 14c bzw. 14d des Steckerbinders 14 geführt. Schließlich kann auch ein Regeleingang 17 des Netzteils 8 ebenfalls auf einen Kontakt 14e des Steckverbinders 14 herausgeführt und dort über eine weitere Steckbrücke 18 mit einem zum benachbarten Kontakt 14f herausgeführten Signalausgang 19 verbunden sein. Diese optionale Variante ist in Fig. 1 gestrichelt eingezeichnet. Ihre Funktion wird später noch erläutert.

Die Funktion der Gleichstromseite 3 des Grundmoduls 1 ist im Alleinbetrieb folgende: Wenn das Grundmodul an das 230V-Wechselspannungsnetz angeschlossen ist und das Netzteil 8 somit in Betrieb ist, schaltet das Relais 12a, 12b den Pluspol 11b des Netzteilausgangs 11a,11b auf den Kontakt 14b. Andernfalls fällt das Relais 12a, 12b ab und es wird der Pluspol 13b des Anschlusses 13 für die Fahrzeugbatterie auf den Kontakt 14b geschaltet. Somit liegt an dem Kontakt 14b stets eine Gleichspannung von 12V an, wenn das Grundmodul 1 entweder an das Wechselspannungsnetz, oder an die Fahrzeugbatterie angeschlossen ist. Durch den Brückenstecker 16 wird diese Gleichspannung von 12V über den Kontakt 14a mit dem gemeinsamen Pluspol 9b der Verbraucheranschlüsse 9 verbunden.

Der Steckverbinder 14 ist zur elektrischen Verbindung des Grundmoduls 1 mit einem Ausbaumodul 100 bestimmt, das einen autarken Betrieb der Stromversorgung des Wohnwagens ermöglicht. Wenn besagte Verbindung hergestellt werden soll, muß zuvor die Steckbrücke 16 und, falls vorhanden, auch die Steckbrücke 18 entfernt werden, wodurch dem ansteckbaren Ausbaumodul 100 ermöglicht wird, die Kontrolle über den Verbraucherstromkreis und ggf. auch die von dem Netzteil 8 abgegebene Spannung zu übernehmen. Solange aber die Steckbrücken 16 und 18 eingesteckt sind, funktioniert das Grundmodul 1 wie eine herkömmliche netzabhängige Stromversorgung, ohne daß die Vorbereitung für den Anschluß des Ausbaumoduls 100 einen nennenswerten Zusatzaufwand bedeutet.

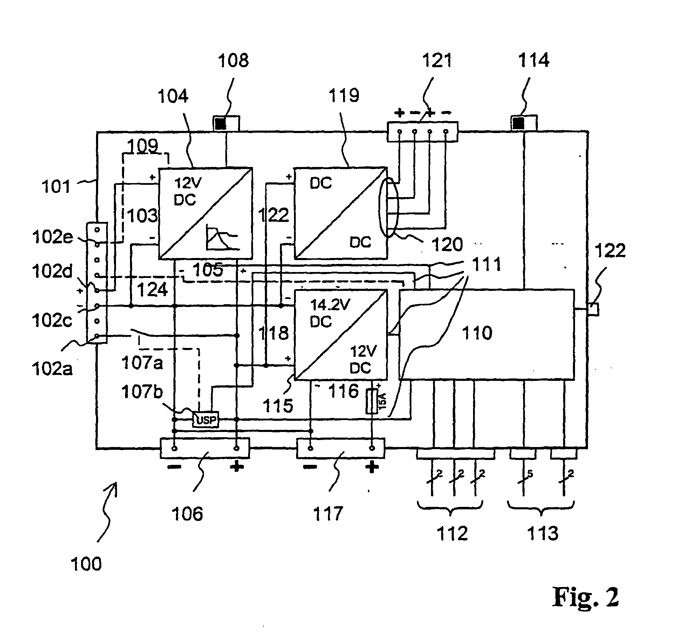

Das Ausbaumodul 100 wird nun anhand Fig. 2 näher beschrieben. Es weist in einer Gehäusewand 101 einen zu dem Steckverbinder 14 passenden Gegenstecker 102 auf, wobei der Gegenstecker 102 im Zusammenwirken mit dem Steckverbinder 14 nicht nur eine elektrische, sondern auch eine mechanische Kopplung zwischen dem Grundmodul 1 und dem Ausbaumodul 100 herstellt. Zur dauerhaften und belastbaren mechanischen Kopplung der beiden Module 1 und 100 sind an den Gehäusen entsprechende mechanische Elemente, z. B. Laschen mit Bohrungen für Schraubverbindungen, vorgesehen.

Von den bei hergestellter Steckverbindung mit den Kontakten 14c und 14d des Steckverbinders 14 verbundenen Kontakte 102c und 102d führen Leitungen zum Eingang 103 eines Ladereglers 104, dessen Ausgang 105 mit einem Anschluß 106 für eine allein zur Stromversorgung des Wohnwagens vorgesehene Versorgungsbatterie verbunden ist. Da im Leistungsteil des Ausbaumoduls 100 ausschließlich Gleichspannungen vorkommen, versteht es sich von selbst, daß alle darin vorkommenden zweipoligen Eingänge und Ausgänge von Komponenten sowie dazugehörigen externen Anschlüsse polaritätsbehaftet sind. Dementsprechend müssen alle hier erwähnten Verbindungen solcher Eingänge, Ausgänge und Anschlüsse jeweils polaritätsrichtig geschaltet sein, wie es auch aus Fig. 2 hervorgeht.

Während die Minuspole des Reglereingangs 103 und des Reglerausgangs 105 miteinander und mit dem Minuspol des Batterieanschlusses 106 verbunden sind, sind die Pluspole des Reglerausgangs 105 und des Batterieanschlusses 106 über den Schaltkontakt 107a eines Relais 107a, 107b mit demjenigen Kontakt 102a des Gegensteckers 102 verbunden, der bei Herstellung der Steckverbindung mit dem zum Pluspol 9b der Verbraucheranschlüsse 9 führenden Kontakt 14a des Steckverbinders 14 verbunden ist. Die Spule 107b des Relais 107a, 107b liegt über dem Batterieanschluß 106 und damit gleichzeitig über dem Ausgang 105 des Ladereglers 104.

Die Funktion des bisher beschriebenen Teils des Ausbaumoduls 100 besteht einerseits darin, den Stromkreis zwischen dem Batterieanschluß 106 und den Verbraucheranschlüssen 9 im Grundmodul 1 dann zu schließen und dadurch eine Leistungsabgabe durch die Versorgungsbatterie zu ermöglichen, wenn die Spannung über der Relaisspule 107b einen Wert hat, der bei angeschlossener Versorgungsbatterie einen ausreichenden Ladezustand derselben anzeigt. Andererseits erfolgt bei vorhandenem Anschluß des Grundmoduls 1 an das 230V-Wechselspannungsnetz eine Aufladung bzw. ständige Nachladung der Versorgungsbatterie vom Netzteil 8 des Grundmoduls 1 aus über den Laderegler 104. Der Verbraucherstromkreis wird bei der Inbetriebnahme des Ausbaumoduls 100 zunächst geschlossen und bei einem Absinken der Batteriespannung unter ca. 11 V durch das Relais 107a, 107b aufgetrennt, um eine schädliche Tiefentladung einer angeschlossenen Versorgungsbatterie zu vermeiden. In diesem Fall wird die Batterie bei vorhandenem 230V-Netzanschluß nur geladen. Bei einem Anstieg der Batteriespannung über ca. 12,5 V wird der Verbraucherstromkreis wieder geschlossen. Die Batterie fungiert dann bei vorhandenem Netzanschluß als Puffer.

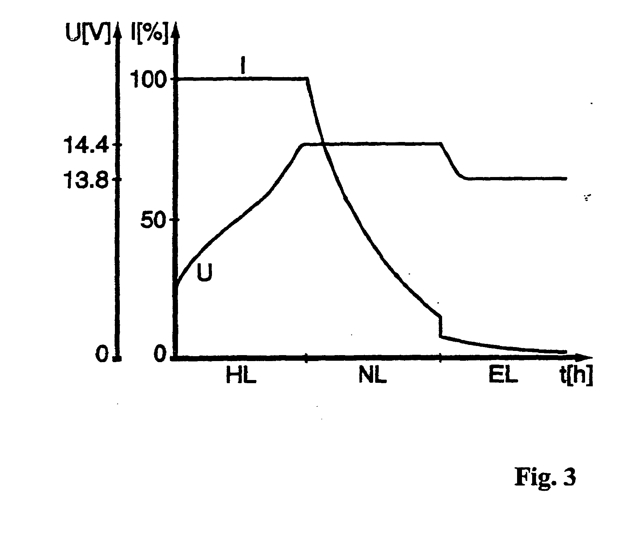

Die Ladekennlinie des Ladereglers 104 ist in Fig. 3 dargestellt. Wie daraus zu ersehen ist, wird bei weitgehend entladener Batterie während einer Hauptladephase HL zunächst der Ladestrom konstant gehalten, bis die Batteriespannung einen vorbestimmten Wert von ca. 14,4 V überschreitet. Danach wird für eine vorbestimmte Zeitspanne, die Nachladephase NL, die Spannung auf dem erreichten Wert konstant gehalten, so daß der Strom während dieser Zeit kontinuierlich absinkt. Nach Ablauf der Nachladephase NL wird die Spannung auf ca. 13,8 V reduziert, so daß der Strom zunächst sprunghaft und dann weiter kontinuierlich absinkt. Dieser letzte, potentiell unbegrenzte Zeitabschnitt ist die Erhaltungsladephase EL. Der beschriebene Ablauf gilt stets für eine Aufladung der Batterie ohne gleichzeitige Stromentnahme durch die angeschlossenen Verbraucher. Bei einer solchen gleichzeitigen Stromentnahme wird je nach deren Umfang nötigenfalls von der Nachladephase NL oder der Erhaltungsladephase EL wieder in die Hauptladephase HL umgeschaltet, wenn anhand des Verbraucherstromes und/oder des Absinkens der Batteriespannung eine entsprechende Entladung festgestellt wird.

Zur Berücksichtigung der unterschiedlichen Eigenschaften von Flüssigkeits- und Gelbatterien ist an dem Laderegler 104 ein Umschalter 108 angeschlossen, durch den dem Laderegler 104 die Art der vorhandenen Batterie mitgeteilt werden kann. Der Laderegler 104 verwendet in Abhängigkeit von der Stellung dieses Schalters 108 unterschiedliche Werte für die Dauer der Nachladephase NL und für die Kriterien zur Zurückschaltung in die Hauptladephase HL.

Der Laderegler 104 kann so ausgeführt sein, daß an seinem Eingang 103 vom Ausgang 11a, 11b des Netzteils 8 des Grundmoduls 1 her eine konstante Spannung von 12 V anliegt und er die von der zuvor beschriebenen Ladekennlinie verlangten Änderungen der Spannung an seinem Ausgang 105 intern erzeugt. Vorzugsweise geschieht diese Spannungsänderung aber bereits an seinem Eingang 103 durch Einwirkung des Ladereglers 104 auf das Netzteil 8 im Grundmodul 1. Hierzu ist ein Signalausgang 109 des Ladereglers 104 mit demjenigen Kontakt 102e des Gegensteckers 102 verbunden, der durch Herstellung der Steckverbindung über den Kontakt 14e des Steckverbinders 14 mit dem Reglereingang 17 des Netzteils 8 verbunden wird.

Bei diesem Reglereingang 17 kann es sich um den Eingang für die Führungsgröße des Reglers, also eine Referenzspannung, handeln, die im Alleinbetrieb des Grundmoduls 1 im Netzteil 8 intern erzeugt und über die Steckbrücke 18 in das Netzteil 8 zurückgeschleift wird. Bausteine zur Erzeugung einer Referenzspannung und deren Einsatz zur Regelung von Schaltnetzteilen sind Stand der Technik. Nach dem Entfernen der Steckbrücke 18 und dem Anstecken des Ausbaumoduls 100 muß in diesem Fall die Referenzspannung dem Netzteil 8 vom Laderegler 104 zur Verfügung gestellt werden, wozu in dem Laderegler 104 ebenfalls ein Referenzspannungsbaustein enthalten ist. Diese Referenzspannung kann nun von dem Laderegler in Abhängigkeit von der jeweiligen Ladephase HL, NL oder EL additiv verändert werden, woraus sich eine entsprechende Änderung der von dem Netzteil 8 an seinem Ausgang 11a, 11b abgegebenen Spannung ergibt.

Bei dem Reglereingang 17 kann es sich alternativ auch um den Eingang für die Regelgröße des Reglers, d.h. um einen über einen internen Spannungsteiler des Netzteils 8 abgegriffenen Teil der tatsächlichen Ausgangsspannung des Netzteils 8 handeln. Dieser Teil der Ausgangsspannung wird im Alleinbetrieb des Grundmoduls über die Steckbrücke 18 in das Netzteil 8 zurückgeschleift und dort zur Bildung der Regeldifferenz von einer intern erzeugten Referenzspannung subtrahiert. Nach dem Entfernen der Steckbrücke 18 und dem Anstecken des Ausbaumoduls 100 kann diese Teilspannung durch den Laderegler 104 mittels eines programmierbaren Spannungsteilers, wie er etwa aus Digital/Analog-Wandlern bekannt ist, in Abhängigkeit von der jeweiligen Ladephase HL, NL oder EL verändert werden, woraus sich eine entsprechende Änderung der von dem Netzteil 8 an seinem Ausgang 11 a, 11b abgegebenen Spannung ergibt.

Die Vorgehensweise, zur Regelung der Ladespannung von dem Laderegler 104 des Ausbaumoduls 100 aus in die Regelung des Schaltnetzteils 8 im Grundmodul 1 einzugreifen, ist besonders vorteilhaft, weil hierdurch ein im Schaltnetzteil 8 ohnehin vorhandener Regelkreis für den Zweck der Laderegelung mitbenutzt und somit bei dem Laderegler 104 schaltungstechnischer Aufwand eingespart werden kann.

Das Ausbaumodul 101 enthält ferner eine Steuerelektronik 110, deren Kernstück ein Mikrocontroller ist. Sie ist mit allen zu steuernden Komponenten des Ausbaumoduls 100 über entsprechende Signalleitungen 111 verbunden und weist eine Reihe von Temperatursensoranschlüssen 112 sowie Anschlüsse 113 für weitere Sensoren, beispielsweise zu Überwachung des Frischwassertanks und des Abwassertanks des Wohnwagens, auf. Darüber hinaus ist an der Steuerelektronik 110 auch ein Hauptschalter 114 angeschlossen, über den der Verbraucherstromkreis notfalls unabhängig von der Spannung am Batterieanschluß 106 manuell geschlossen werden kann, beispielsweise um bei Dunkelheit trotz niedriger Batteriespannung noch kurzzeitig eine Lichtquelle zu betreiben.

Von besonderem Interesse für die Laderegelung ist bei der Steuerelektronik 110 die Verarbeitung der an den Temperatursensoranschlüssen 112 anstehenden Signale. Insbesondere sind hierbei Sensoren zur Erfassung der Batterietemperatur, der Innentemperatur im Gehäuse der Stromversorgung und der Umgebungstemperatur innerhalb und außerhalb des Wohnwagens vorgesehen. Bei einem übermäßigen Anstieg der Batterietemperatur oder der Gehäusetemperatur der Stromversorgung wird die Ladespannung nach vorgegebenen, vorzugsweise linearen Kennlinien reduziert, um dem Temperaturanstieg entgegenzuwirken. Hierzu erhält der Laderegler 104 entsprechende Signale von der Steuerelektronik 110 über eine der erwähnten Steuerleitungen 111. Bei Überschreitung vorbestimmter Schwellen der Batterietemperatur oder der Gehäusetemperatur wird der Ladevorgang völlig abgebrochen, bis eine gewisse Abkühlung erfolgt ist, d.h. vorbestimmte niedrigere Schwellen wieder unterschritten sind, um eine Beschädigung der Batterie oder der Stromversorgung durch thermische Überlastung zu vermeiden.

Das Ausbaumodul enthält ferner einen spannungserhöhenden Gleichspannungswandler 115, dessen Eingang 116 mit einem Anschluß 117 für das 12V-Bordnetz des Zugfahrzeugs verbunden ist, und dessen Ausgang 118 parallel zum Ausgang 105 des Ladereglers 104 geschaltet ist. Der Gleichspannungswandler 115 liefert an seinem Ausgang eine konstante Spannung von ca. 14,2 V, wenn das 12V-Bordnetz an seinem Eingang 116 angeschlossen ist, wobei mit 12V-Bordnetz hier ein Anschluß von letzterem gemeint ist, der nur bei laufendem Motor und damit auch Generator des Zugfahrzeugs Spannung führt. Die Ausgangsspannung des Gleichspannungswandlers 115 wird von der Steuerelektronik 110 analog zu derjenigen des Ladereglers 104 temperaturabhängig gesteuert, um einer Überhitzung der Batterie oder der Stromversorgung vorzubeugen. Der Gleichspannungswandler 115 realisiert aber keine Ladekennlinie der für den Laderegler 104 anhand Fig. 3 beschriebenen Art. Er stellt lediglich einen Zugang zum Generator des Zugfahrzeugs als zusätzliche Energiequelle her, was insbesondere dann von Interesse ist, wenn bei einer längeren Reise kein Anschluß der Stromversorgung an das 230V-Netz möglich ist.

In dem Gleichspannungswandler 115 sind Sperrdioden vorgesehen, um eine Spannungsverschleppung vom Batterieanschluß 106 zum Bordnetzanschluß 117 zu vermeiden, während eine Spannungsverschleppung vom Anschluß 106 der Versorgungsbatterie zum Anschluß 13 der Fahrzeugbatterie im Grundmodul 1 bereits durch die Verdrahtung der Steckverbindung 14, 102 ausgeschlossen ist. Somit ist die Steckverbindung vom Wohnwagen zum Zugfahrzeug in Bezug auf die Versorgungsbatterie des Wohnwagens kurzschlußsicher.

Schließlich enthält das Ausbaumodul auch noch einen Solarregler 119, dessen Eingang 120 mit einem Anschluß 121 für zwei Solarzellenmodule verbunden ist, und dessen Ausgang 121 parallel zu den Ausgängen 105 und 118 des Ladereglers 104 bzw. des Gleichspannungswandlers 115 geschaltet ist. Solarregler zum Laden einer 12V-Batterie aus Solarzellenmodulen sind Stand der Technik und bedürfen keiner näheren Erläuterung. Mit dem Solarregler 119 und dem zugeordneten Solarmodulanschluß 121 wird die Möglichkeit eröffnet, die Stromversorgung über längere Zeit ohne Anschluß an das 230V-Netz und auch ohne Bewegung des Wohnwagens aufrechtzuerhalten.

Die Steuerelektronik 110 weist noch eine Busschnittstelle für einen externen Datenbus, z.B. einen CAN-Bus, auf, die in Form eines entsprechenden Steckverbinders 122 aus dem Ausbaumodul 100 herausgeführt ist. Dieser Steckverbinder 122 ist zum Anschluß eines in den Figuren nicht dargestellten, optionalen dritten Moduls vorgesehen, das insbesondere Anzeigelemente bereitstellt, die den Benutzer über den Status der Stromversorgung 1, 100 und der daran angeschlossenen Energiequellen, sowie über die von der Steuerelektronik 110 des Ausbaumoduls 100 über die Sensoranschlüsse 112 und 113 erfaßten Meßdaten informieren. Zu diesen Meßdaten zählen beispielsweise die Innentemperatur des Wohnwagens und die Außentemperatur, sowie die Füllstände des Frischwasser- und des Abwassertanks. Darüber hinaus kann das dritte Modul auch Bedienelemente enthalten, die bei seinem Anschluß an das Ausbaumodul 100 beispielsweise die Funktion des an letzterem vorgesehenen Schalters 114 ersetzen.

Eine weitere mögliche Funktion der Steuerelektronik besteht in der direkten Einstellung der Ausgangsspannung des Netzteils 8 im Grundmodul 1 mittels einer über die Steckverbindung 14, 102 geführten Datenleitung 20 bzw. 124. In diesem Fall weist das Netzteil 8 ebenso wie die Steuerelektronik 110 einen Mikrocontroller auf und die von dem Netzteil 8 an seinem Ausgang 11a, 11b abzugebende Spannung wird diesem Mikrocontroller von demjenigen der Steuerelektronik 110 in Form digitaler Daten mitgeteilt. Bei dieser Variante erübrigt sich das Herausschleifen einer Regelgröße über eine Steckbrücke 18. Der Mikrocontroller des Netzteils 8 stellt anhand der Datenleitung 20 fest, ob das Ausbaumodul angesteckt ist und bezieht in diesem Fall den Wert der einzustellenden Ausgangsspannung über die Datenleitung 20, 124. Andernfalls legt er den Wert intern auf 12 V fest.

Die hier beschriebene Kontaktbelegung des Steckverbinders 14 und des Gegensteckers 102 ist als beispielhaft zu verstehen, insbesondere was die Anzahl der Kontakte anbelangt. So ist es unter Umständen zweckmäßig, Leitungen, die im Betrieb einen hohen Strom führen, über mehrere zueinander parallel geschaltete Kontakte zu führen, um so die Strombelastung jedes einzelnen Kontaktes zu begrenzen. Auch kann es zweckmäßig sein, für die Regelung der Ausgangsspannung des Netzteils 8 im Grundmodul 1 vom Laderegler 104 oder von der Steuerelektronik 110 des Ausbaumoduls 100 aus mehr als die eine hier jeweils erwähnte Leitung 109, 17 bzw. 124, 20 vorzusehen.

## Patentansprüche

1. Stromversorgungseinrichtung für einen Wohnwagen, umfassend ein Grundmodul mit einem Netzteil zur Umwandlung einer Netzwechselspannung in eine Gleichspannung, einem Anschluß zur Verbindung des Eingangs des Netzteils mit einem externen Wechselspannungsnetz, und mehreren zueinander parallel geschalteten Anschlüssen für Gleichstromverbraucher, wobei das Grundmodul (1) zum Anschluß eines Ausbaumoduls vorgerichtet ist, indem an ihm ein Steckverbinder (14) vorgesehen ist, an den beide Pole (11a, 11b) des Ausgangs des Netzteils (8) und mindestens ein Pol (9b) der parallelen Verbraucheranschlüsse (9) dergestalt herausgeführt sind, daß der Ausgang (11a, 11b) des Netzteils (8) und die parallelen Verbraucheranschlüsse (9) nur über Kontakte (14a, 14b) des Steckverbinders (14) vollständig miteinander verbindbar sind, wobei diese Verbindung mittels einer an dem Steckverbinder (14) einsteckbaren Steckbrücke (16) herstellbar ist, und daß das Grundmodul (1) bei nicht eingesteckter Steckbrücke (16) über den Steckverbinder (14) mit einem Ausbaumodul (100) so verbindbar ist, daß bei vorhandenem Netzanschluß des Grundmoduls (1) von dessen Netzteil (8) aus Strom an das Ausbaumodul (100) und von letzterem aus Strom an die parallelen Verbraucheranschlüsse (9) des Grundmoduls (1) abgebbar ist, während bei nicht vorhandenem Netzanschluß des Grundmoduls (1) netzunabhängiger Strom von dem Ausbaumodul (100) aus an die parallelen Verbraucheranschlüsse (9) des Grundmoduls (1) abgebbar ist, wobei der Verbraucherstromkreis bei angestecktem Ausbaumodul (100) unter dessen Kontrolle steht.

2. Stromversorgungseinrichtung Anspruch 1, **dadurch gekennzeichnet, daß** das Netzteil (8) ein regelbares Schaltnetzteil ist, und daß die Führungsgröße oder die Regelgröße dergestalt zu dem Steckverbinder (14) herausgeführt ist, daß sie nur über Kontakte(14e, 14f) des Steckverbinders (14) dem Regler des Netzteils (8) zuführbar ist.

3. Stromversorgungseinrichtung nach Anspruch 1 oder 2, **dadurch gekennzeichnet, daß** zur vollständigen Verbindung des Ausgangs (11a, 11b) des Netzteils (8) mit den parallelen Verbraucheranschlüssen (9) und/oder zur Zuführung der Führungsgröße oder der Regelgröße an den Regler des Netzteils (8) ein an dem Steckverbinder (14) einsteckbarer Brückenstecker (16, 18) vorgesehen ist.

4. Stromversorgungseinrichtung nach einem der Ansprüche 1 bis 3, **dadurch gekennzeichnet, daß** an dem Grundmodul (1) ein Anschluß (13) für eine externe Gleichspannungsquelle und ein automatischer Umschalter (12a, 12b) vorgesehen ist, der bei Betrieb des Netzteils (8) mindestens einen Pol (11b) von dessen Ausgang (11a, 11b) und bei Nichtbetrieb des Netzteils (8) mindestens einen Pol (13b) des Gleichspannungsanschlusses (13) auf den- bzw. dieselben Kontakte (14b) des Steckverbinders (14) schaltet.

5. Stromversorgungseinrichtung einem der Ansprüche 1 bis 4, **dadurch gekennzeichnet, daß** das Grundmodul (1) Anschlüsse (5) für Wechselstromverbraucher aufweist, die über Sicherungen (6) mit dem Anschluß (4) zur Verbindung des Netzteileingangs mit einem externen Wechselspannungsnetz verbunden sind.

6. Stromversorgungseinrichtung einem der Ansprüche 1 bis 5, **dadurch gekennzeichnet, daß** ein mit dem Grundmodul (1) über den Steckverbinder(14) verbindbares Ausbaumodul (100) vorgesehen ist, welches einen Laderegler (104), einen mit dessen Ausgang (105) verbundenen Anschluß (106) für eine Versorgungsbatterie, und einen zu dem Steckverbinder (14) des Grundmoduls (1) passenden Gegenstecker (102) aufweist, wobei der Eingang (103) des Ladereglers (104) mit denjenigen Kontakten (102c, 102d) des Gegensteckers (102) verbunden ist, die durch Herstellung der Steckverbindung mit dem Ausgang (11a, 11b) des Netzteils (8) des Grundmoduls (1) verbindbar sind, ein Pol des Versorgungsbatterieanschlusses (106) mit einem dieser Kontakte (102c) verbunden ist, und der andere Pol des Versorgungsbatterieanschlusses (106) mit demjenigen Kontakt (102a) des Gegensteckers (102) verbunden ist, der durch Herstellung der Steckverbindung mit dem herausgeführten Pol (9b) der parallelen Verbraucheranschlüsse (9) verbindbar ist.

7. Stromversorgungseinrichtung nach Anspruch 6, **dadurch gekennzeichnet, daß** mindestens einer der Pole des Versorgungsbatterieanschlusses (106) über einen Schalter (107a, 107b) mit dem jeweils zugeordneten Kontakt (102a) des Gegensteckers (102) verbunden ist und der Schalter (107a, 107b) automatisch beim Ansteigen der Spannung am Versorgungsbatterieanschluß (106) über eine vorbestimmte Schwelle schließt und beim Absinken dieser Spannung unter eine vorbestimmte Schwelle öffnet.

8. Stromversorgungseinrichtung nach Anspruch 6 oder 7, **dadurch gekennzeichnet, daß** das Ausbaumodul (100) einen spannungserhöhenden Gleichspannungswandler (115) aufweist, dessen Eingang (116) mit einem Anschluß (117) für eine externe Gleichspannungsquelle verbunden ist, und dessen Ausgang (118) parallel zum Ausgang (105) des Ladereglers (104) geschaltet ist.

9. Stromversorgungseinrichtung nach einem der Ansprüche 6 bis 8, **dadurch gekennzeichnet, daß** das Ausbaumodul (100) einen Solarregler (119) aufweist, dessen Eingang (120) mit einem Anschluß (121) für mindestens ein externes Solarzellenmodul verbunden ist, und dessen Ausgang (122) parallel zum Ausgang (105) des Ladereglers (104) geschaltet ist.

10. Stromversorgungseinrichtung nach einem der Ansprüche 6 bis 9, **dadurch gekennzeichnet, daß** ein Signalausgang (109) des Ladereglers (105) mit demjenigen Kontakt (102e) des Gegensteckers (102) verbunden ist, der durch Herstellung der Steckverbindung mit dem Regeleingang (17) des Netzteils (8) verbindbar ist, und daß der Laderegler (105) im Betrieb über diese Verbindung ein Signal an das Netzteil (8) abgibt, welches dessen Ausgangsspannung regelt.

11. Stromversorgungseinrichtung nach einem der Ansprüche 6 bis 10, **dadurch gekennzeichnet, daß** das Ausbaumodul (100) eine Steuerelektronik (110) und mindestens einen mit der Steuerelektronik (110) verbundenen Anschluß (112) für einen Temperaturfühler aufweist, wobei die Steuerelektronik (110) die Ausgangsspannung und/oder den Ausgangsstrom des Ladereglers (105) oder des Gleichspannungswandlers (115) in Abhängigkeit von der Batterietemperatur und/oder der Temperatur der Stromversorgung (1, 100) und/oder der Zeit steuert.

12. Stromversorgungseinrichtung nach Anspruch 11, **dadurch gekennzeichnet, daß** die Steuerelektronik (110) durch mindestens eine über den Gegenstecker (102) und den Steckverbinder (14) geführte Leitung (124, 20) direkt die Ausgangsspannung des Netzteils (8) in Abhängigkeit von einem Sollwert der Ausgangsspannung und/oder des Ausgangsstromes des Ladereglers (105) einstellt.

13. Stromversorgungseinrichtung nach Anspruch 11 oder 12, **dadurch gekennzeichnet, daß** das Ausbaumodul (100) eine Schnittstelle (122) zum Anschluß eines externen Datenbusses an die Steuerelektronik (110) aufweist.

14. Stromversorgungseinrichtung nach Anspruch 13, **dadurch gekennzeichnet, daß** das Ausbaumodul (100) mit der Steuerelektronik (110) verbundene Anschlüsse (113) für weitere Sensoren aufweist, deren Signale durch die Steuerelektronik (110) auswertbar und als entsprechende Meßdaten über die Schnittstelle (122) ausgebbar sind.

15. Ausbaumodul für eine Stromversorgungseinrichtung für einen Wohnwagen, welches mit einem Grundmodul (1) nach einem der Ansprüche 1 bis 5 über dessen Steckverbinder (14) verbindbar ist, und welches einen Laderegler (104), einen mit dessen Ausgang (105) verbundenen Anschluß (106) für eine Versorgungsbatterie, und einen zu dem Steckverbinder (14) des Grundmoduls (1) passenden Gegenstecker (102) aufweist, wobei der Eingang (103) des Ladereglers (104) mit denjenigen Kontakten (102c, 102d) des Gegensteckers (102) verbunden ist, die durch Herstellung der Steckverbindung mit dem Ausgang (11a, 11b) des Netzteils (8) des Grundmoduls (1) verbindbar sind, ein Pol des Versorgungsbatterieanschlusses (106) mit einem dieser Kontakte (102c) verbunden ist, und der andere Pol des Versorgungsbatterieanschlusses (106) mit demjenigen Kontakt (102a) des Gegensteckers (102) verbunden ist, der durch Herstellung der Steckverbindung mit dem herausgeführten Pol (9b) der parallelen Verbraucheranschlüsse (9) verbindbar ist.

16. Ausbaumodul nach Anspruch 15, **dadurch gekennzeichnet, daß** mindestens einer der Pole des Versorgungsbatterieanschlusses (106) über einen Schalter (107a, 107b) mit dem jeweils zugeordneten Kontakt (102a) des Gegensteckers (102) verbunden ist und der Schalter (107a, 107b) automatisch beim Ansteigen der Spannung am Versorgungsbatterieanschluß (106) über eine vorbestimmte Schwelle schließt und beim Absinken dieser Spannung unter eine vorbestimmte Schwelle öffnet.

17. Ausbaumodul nach Anspruch 15 oder 16, **dadurch gekennzeichnet, daß** es einen spannungserhöhenden Gleichspannungswandler (115) aufweist, dessen Eingang (116) mit einem Anschluß (117) für eine externe Gleichspannungsquelle verbunden ist, und dessen Ausgang (118) parallel zum Ausgang (105) des Ladereglers (104) geschaltet ist.

18. Ausbaumodul nach einem der Ansprüche 15 bis 17, **dadurch gekennzeichnet, daß** es einen Solarregler (119) aufweist, dessen Eingang (120) mit einem Anschluß (121) für mindestens ein externes Solarzellenmodul verbunden ist, und dessen Ausgang (122) parallel zum Ausgang (105) des Ladereglers (104) geschaltet ist.

19. Ausbaumodul nach einem der Ansprüche 15 bis 18, **dadurch gekennzeichnet, daß** ein Signalausgang (109) des Ladereglers (105) mit demjenigen Kontakt (102e) des Gegensteckers (102) verbunden ist, der durch Herstellung der Steckverbindung mit dem Regeleingang (17) des Netzteils (8) verbindbar ist, und daß der Laderegler (105) im Betrieb über diese Verbindung ein Signal an das Netzteil (8) abgibt, welches dessen Ausgangsspannung regelt.

20. Ausbaumodul nach einem der Ansprüche 15 bis 19, **dadurch gekennzeichnet, daß** es eine Steuerelektronik (110) und mindestens einen mit der Steuerelektronik (110) verbundenen Anschluß (112) für einen Temperaturfühler aufweist, wobei die Steuerelektronik (110) die Ausgangsspannung und/oder den Ausgangsstrom des Ladereglers (105) oder des Gleichspannungswandlers (115) in Abhängigkeit von der Batterietemperatur und/oder der Temperatur der Stromversorgung (1, 100) und/oder der Zeit steuert.

21. Ausbaumodul nach Anspruch 20, **dadurch gekennzeichnet, daß** die Steuerelektronik (110) durch mindestens eine über den Gegenstecker (102) und den Steckverbinder (14) geführte Leitung (124, 20) direkt die Ausgangsspannung des Netzteils (8) des Grundmoduls (1) in Abhängigkeit von einem Sollwert der Ausgangsspannung und/oder des Ausgangsstromes des Ladereglers (105) einstellt.

22. Ausbaumodul nach Anspruch 20 oder 21, **dadurch gekennzeichnet, daß** es eine Schnittstelle (122) zum Anschluß eines externen Datenbusses an die Steuerelektronik (110) aufweist.

23. Ausbaumodul nach Anspruch 22, **dadurch gekennzeichnet, daß** es mit der Steuerelektronik (110) verbundene Anschlüsse (113) für weitere Sensoren aufweist, deren Signale durch die Steuerelektronik (110) auswertbar und als entsprechende Meßdaten über die Schnittstelle (122) ausgebbar sind.

## Claims

1. Current supply device for a caravan, comprising a base module with a mains unit for conversion of an alternating current mains voltage to a direct current voltage, a connection for connecting the input of the mains unit to an external alternating current voltage mains, and a plurality of parallel connections for direct current consumers, wherein the base module (1) is set up for connection of an extension module in that it is provided with a plug-in connector (14) to which both poles (11a, 11b) of the output of the mains unit (8) and at least one pole (9b) of the parallel consumer connections (9) are run out such that the output (11a, 11b) of the mains unit (8) and the parallel consumer connections (9) can only be connected to one another completely through contacts (14a, 14b) of the plug-in connector (14), wherein this connection can be produced by means of a plug-in bridge (16) which can be inserted in the plug-in connector (14), and wherein when the plug-in bridge (16) is not inserted, the base module (1) can be connected through the plug-in connector (14) to an extension module (100) so that when the mains connection of the base module (1) is made, current can be supplied from its main unit (8) to the extension module (100) and current can be supplied from the latter to the parallel consumer connections (9) of the base module (1), whereas when the mains connection of the base module (1) is not made, current independent of the mains can be supplied from the extension module (100) to the parallel consumer connections (9) of the base module (1), the consumer circuit being under the control of the extension module (100) when the latter is connected.

2. Current supply device according to claim 1, **characterised in that** the mains unit (8) is a controllable switching mains unit and **in that** the command variable or the controlled variable is run out to the plug-in connector (14) such that it can only be fed to the controller of the mains unit (8) through contacts (14e, 14f) of the plug-in connector (14).

3. Current supply device according to claim 1 or 2, **characterised in that** a bridge plug (16, 18) which can be inserted in the plug-in connector (14) is provided for complete connection of the output (11a, 11b) of the mains unit (8) to the parallel consumer connections (9) and/or for supplying the command variable or the controlled variable to the controller of the mains unit (8).

4. Current supply device according to one of claims 1 to 3, **characterised in that** the base module (1) is provided with a connection (13) for an external direct current voltage source and an automatic selector switch (12a, 12b) which when the mains unit (8) is in operation switches at least one pole (11b) of its output (11a, 11b), and when the mains unit (8) is not in operation, switches at least one pole (13b) of the direct current voltage connection (13) to the same contact or contacts (14b) of the plug-in connector (14).

5. Current supply device according to one of claims 1 to 4, **characterised in that** the base module (1) exhibits connections (5) for alternating current consumers which are connected through fuses (6) to the connection (4) for connecting the input of the mains unit to an external alternating current voltage mains.

6. Current supply device according to one of claims 1 to 5, **characterised in that** an extension module (100) is provided which can be connected to the base module (1) through the plug-in connector (14) and which exhibits a charging controller (104), a connection (106) which is connected to its output (105) and intended for a supply battery, and a counterpart plug (102) which fits the plug-in connector (14) of the base module (1), wherein the input (103) of the charging controller (104) is connected to the contacts (102c, 102d) of the counterpart plug (102) which can be connected by making the plug connection to the output (11a, 11b) of the mains unit (8) of the base module (1), one pole of the supply battery connection (106) is connected to one of these contacts (102c), and the other pole of the supply battery connection (106) is connected to the contact (102a) of the counterpart plug (102) which can be connected by making the plug connection to the pole (9b) of the parallel consumer connections (9) which is run out.

7. Current supply device according to claim 6, **characterised in that** at least one of the poles of the supply battery connection (106) is connected through a switch (107a, 107b) to the associated contact (102a) of the counterpart plug (102), and the switch (107a, 107b) automatically closes when the voltage at the supply battery connection (106) rises above a predetermined threshold, and opens when this voltage falls below a predetermined threshold.

8. Current supply device according to claim 6 or 7, **characterised in that** the extension module (100) exhibits a voltage-increasing direct current voltage converter (115) whose input (116) is connected to a connection (117) for an external direct current voltage source, and whose output (118) is connected parallel to the output (105) of the charging controller (104).

9. Current supply device according to one of claims 6 to 8, **characterised in that** the extension module (100) exhibits a solar controller (119) whose input (120) is connected to a connection (121) for at least one external solar cell module, and whose output (122) is connected parallel to the output (105) of the charging controller (104).

10. Current supply device according to one of claims 6 to 9, **characterised in that** a signal output (109) of the charging controller (105) is connected to the contact (102e) of the counterpart plug (102) which can be connected by making the plug connection to the control input (17) of the mains unit (8), and **in that** when in operation the charging controller (105) emits a signal through this connection to the mains unit (8) which regulates its output voltage.

11. Current supply device according to one of claims 6 to 10, **characterised in that** the extension module (100) exhibits control electronics (110) and at least one connection (112) which is connected to the control electronics (110) and serves for a temperature sensor, wherein the control electronics (110) control the output voltage and/or the output current of the charging controller (105) or the direct current voltage converter (115) depending on the battery temperature and/or the temperature of the current supply device (1, 100) and/or the time.

12. Current supply device according to claim 11, **characterised in that** the control electronics (110) adjust the output voltage of the mains unit (8) directly through at least one conductor (124, 20) passing through the counterpart plug (102) and the plug-in connector (14) according to a set value for the output voltage and/or the output current of the charging controller (105).

13. Current supply device according to claim 11 or 12, **characterised in that** the extension module (100) exhibits an interface (122) for connection of an external data bus to the control electronics (110).

14. Current supply device according to claim 13, **characterised in that** the extension module (100) exhibits connections (113) which are connected to the control electronics (110) and serve for further sensors whose signals can be evaluated by the control electronics (110) and emitted as corresponding measurement data through the interface (122).

15. Extension module for a current supply device for a caravan which can be connected to a base module (1) according to one of claims 1 to 5 through its plug-in connector (14), and which exhibits a charging controller (104), a connection (106) which is connected to its output (105) and serves for a supply battery, and a counterpart plug (102) which fits the plug-in connector (14) of the base module (1), wherein the input (103) of the charging controller (104) is connected to the contacts (102c, 102d) of the counterpart plug (102) which can be connected by making the plug connection to the output (11a, 11b) of the mains unit (8) of the base module (1), one pole of the supply battery connection (106) is connected to one of these contacts (102c) and the other pole of the supply battery connection (106) is connected to the contact (102a) of the counterpart plug (102) which can be connected by making the plug connection to the pole (9b) of the parallel consumer connections (9) which is run out.

16. Extension module according to claim 15, **characterised in that** at least one of the poles of the supply battery connection (106) is connected through a switch (107a, 107b) to the associated contact (102a) of the counterpart plug (102), and the switch (107a, 170b) automatically closes when the voltage at the supply battery connection (106) rises above a predetermined threshold, and opens when this voltage falls below a predetermined threshold.

17. Extension module according to claim 15 or 16, **characterised in that** it exhibits a voltage-increasing direct current voltage converter (115) whose input (116) is connected to a connection (117) for an external direct current voltage source, and whose output (118) is connected parallel to the output (105) of the charging controller (104).

18. Extension module according to one of claims 15 to 17, **characterised in that** it exhibits a solar controller (119) whose input (120) is connected to a connection (121) for at least one external solar cell module, and whose output (122) is connected parallel to the output (105) of the charging controller (104).

19. Extension module according to one of claims 15 to 18, **characterised in that** a signal output (109) of the charging controller (105) is connected to the contact (102e) of the counterpart plug (102) which can be connected by making the plug connection to the control input (17) of the mains unit (8), and **in that** when in operation the charging controller (105) emits a signal through this connection to the mains unit (8) which regulates its output voltage.

20. Extension module according to one of claims 15 to 19, **characterised in that** it exhibits control electronics (110) and at least one connection (112) which is connected to the control electronics (110) and serves for a temperature sensor, wherein the control electronics (110) control the output voltage and/or the output current of the charging controller (105) or the direct current voltage converter (115) depending on the battery temperature and/or the temperature of the current supply device (1, 100) and/or the time.

21. Extension module according to claim 20, **characterised in that** the control electronics (110) adjust the output voltage of the mains unit (8) of the base module (1) directly through at least one conductor (124, 20) passing through the counterpart plug (102) and the plug-in connector (14) according to a set value for the output voltage and/or the output current of the charging controller (105).

22. Extension module according to claim 20 or 21, **characterised in that** it exhibits an interface (122) for connection of an external data bus to the control electronics (110).

23. Extension module according to claim 22, **characterised in that** it exhibits connections (113) which are connected to the control electronics (110) and serve for further sensors whose signals can be evaluated by the control electronics (110) and emitted as corresponding measurement data through the interface (122).

## Revendications

1. Dispositif d'alimentation électrique pour une caravane, comprenant un module de base avec une partie de réseau pour la transformation d'une tension alternative de réseau en une tension continue, une borne pour le raccordement de l'entrée de la partie de réseau avec un réseau externe de tension alternative, et plusieurs bornes montées parallèlement les unes aux autres pour des utilisateurs de courant continu, où le module de base (1) est équipé pour le raccordement d'un module d'extension en ce qu'il est prévu sur celui-ci un connecteur à fiches (14), sur lequel les deux pôles (11a, 11b) de la sortie de la partie de réseau (8) et au moins un pôle (9b) des bornes d'abonné parallèles (9) sont réalisés de telle sorte que la sortie (11a, 11b) de la partie de réseau (8) et les bornes d'abonné parallèles (9) peuvent uniquement être raccordées complètement l'une avec l'autre par le biais de contacts (14a, 14b) du connecteur à fiches (14), ce raccordement pouvant être réalisé au moyen d'une fiche de pontage (16) pouvant être insérée sur le connecteur à fiches (14), et que, lorsque la fiche de pontage (16) n'est pas insérée, le module de base (1) peut être raccordé avec un module d'extension (100) par le biais du connecteur à fiches (14) de telle sorte que, en présence d'un raccordement au réseau du module de base (1), du courant peut être délivré depuis sa partie de réseau (8) au module d'extension (100) et depuis celui-ci aux bornes d'abonné parallèles (9) du module de base (1), tandis que, en l'absence d'un raccordement au réseau du module de base (1), du courant indépendant du réseau peut être délivré depuis le module d'extension (100) aux bornes d'abonné parallèles (9) du module de base (1), le circuit de courant d'utilisateur étant sous le contrôle du module d'extension (100) lorsque celui-ci est raccordé.

2. Dispositif d'alimentation électrique selon la revendication 1, **caractérisé en ce que** la partie de réseau (8) est une partie de réseau combinatoire réglable, et **en ce que** la dimension de guidage ou la dimension de réglage est sortie vers le connecteur à fiches (14) de telle sorte qu'elle peut uniquement être amenée au régulateur de la partie de réseau (8) par le biais de contacts (14e, 14f) du connecteur à fiches (14).

3. Dispositif d'alimentation électrique selon la revendication 1 ou 2, **caractérisé en ce qu'**une fiche de pontage (16, 18) pouvant être insérée sur le connecteur à fiches (14) est prévue pour le raccordement complet de la sortie (11a, 11b) de la partie de réseau (8) avec les bornes d'abonné parallèles (9) et/ou pour l'amenée de la dimension de guidage ou de la dimension de réglage au régulateur de la partie de réseau (8).

4. Dispositif d'alimentation électrique selon l'une quelconque des revendications 1 à 3, **caractérisé en ce qu'**il est prévu sur le module de base (1) une borne (13) pour une source de tension continue externe et un commutateur automatique (12a, 12b) qui commute, en cas d'utilisation de la partie de réseau (8), au moins un pôle (11b) depuis sa sortie (11a, 11b), et en cas de non-utilisation de la partie de réseau (8), au moins un pôle (13b) de la borne de tension continue (13) sur le ou les mêmes contacts (14b) du connecteur à fiches (14).

5. Dispositif d'alimentation électrique selon l'une quelconque des revendications 1 à 4, **caractérisé en ce que** le module de base (1) présente des bornes (5) pour des utilisateurs de courant alternatif qui sont connectées par le biais de fusibles (6) avec la borne (4) pour la connexion de l'entrée de la partie de réseau avec un réseau externe de tension alternative.

6. Dispositif d'alimentation électrique selon l'une quelconque des revendications 1 à 5, **caractérisé en ce qu'**il est prévu un module d'extension (100) pouvant être relié avec le module de base (1) par le biais du connecteur à fiches (14), lequel présente un régulateur de charge (104), une borne (106) reliée avec sa sortie (105) pour une batterie d'alimentation, et une contre-fiche (102) adaptée au connecteur à fiches (14) du module de base (1), l'entrée (103) du régulateur de charge (104) étant reliée avec les contacts (102c, 102d) de la contre-fiche (102) qui peuvent être reliés par la réalisation de la connexion à fiches avec la sortie (11a, 11b) de la partie de réseau (8) du module de base (1), un pôle de la borne de la batterie d'alimentation (106) étant relié avec l'un de ces contacts (102c), et l'autre pôle de la borne de la batterie d'alimentation (106) étant relié avec le contact (102a) de la contre-fiche (102) qui peut être relié par la réalisation de la connexion à fiches avec le pôle sorti (9b) des bornes d'abonné parallèles (9).

7. Dispositif d'alimentation électrique selon la revendication 6, **caractérisé en ce qu'**au moins l'un des pôles de la borne de la batterie d'alimentation (106) est relié par le biais d'un commutateur (107a, 107b) avec le contact (102a) lui afférent de la contre-fiche (102) et le commutateur (107a, 107b) se ferme automatiquement en cas d'augmentation de la tension à la borne de la batterie d'alimentation (106) au-delà d'un seuil prédéterminé et s'ouvre en cas de diminution de cette tension en dessous d'un seuil prédéterminé.

8. Dispositif d'alimentation électrique selon l'une quelconque des revendications 6 ou 7, **caractérisé en ce que** le module d'extension (100) présente un convertisseur continu-continu (115), dont l'entrée (116) est reliée avec une borne (117) pour une source de tension continue externe et dont la sortie (118) est montée parallèlement à la sortie (105) du régulateur de charge (104).

9. Dispositif d'alimentation électrique selon l'une quelconque des revendications 6 à 8, **caractérisé en ce que** le module d'extension (100) présente un régulateur solaire (119), dont l'entrée (120) est reliée avec une borne (121) pour au moins un module externe de cellules solaires et dont la sortie (122) est montée parallèlement à la sortie (105) du régulateur de charge (104).

10. Dispositif d'alimentation électrique selon l'une quelconque des revendications 6 à 9, **caractérisé en ce qu'**une sortie de signal (109) du régulateur de charge (105) est reliée avec le contact (102e) de la contre-fiche (102) qui peut être relié par la réalisation de la connexion à fiches avec l'entrée du régulateur (17) de la partie de réseau (8), et **en ce que** le régulateur de charge (105), pendant le fonctionnement, émet par le biais de cette connexion un signal à la partie de réseau (8) qui régule sa tension de sortie.

11. Dispositif d'alimentation électrique selon l'une quelconque des revendications 6 à 10, **caractérisé en ce que** le module d'extension (100) présente un système électronique de commande (110) et au moins une borne (112) reliée avec le système électronique de commande (110) pour un capteur de température, le système électronique de commande (110) commandant la tension de sortie et/ou le courant de sortie du régulateur de charge (105) ou du convertisseur continu-continu (115) en fonction de la température de la batterie et/ou de la température de l'alimentation électrique (1, 100) et/ou du temps.

12. Dispositif d'alimentation électrique selon la revendication 11, **caractérisé en ce que** le système électronique de commande (110) règle directement la tension de sortie de la partie de réseau (8) en fonction d'une valeur de consigne de la tension de sortie et/ou du courant de sortie du régulateur de charge (105) au moyen d'au moins une conduite (124, 20) guidée par le biais de la contre-fiche (102) et du connecteur à fiches (14).

13. Dispositif d'alimentation électrique selon l'une quelconque des revendications 11 ou 12, **caractérisé en ce que** le module d'extension (100) présente une interface (122) pour le raccordement d'un bus de données externe au système électronique de commande (110).

14. Dispositif d'alimentation électrique selon la revendication 13, **caractérisé en ce que** le module d'extension (100) présente des bornes (113) reliées avec le système électronique de commande (110) pour des capteurs supplémentaires dont des signaux peuvent être exploités par le système électronique de commande (110) et émis comme données de mesure correspondantes par l'interface (122).

15. Module d'extension pour un dispositif d'alimentation électrique pour caravane qui peut être relié avec un module de base (1), selon l'une quelconque des revendications 1 à 5, par le biais de son connecteur à fiches (14) et qui présente un régulateur de charge (104), une borne (106) reliée avec sa sortie (105) pour une batterie d'alimentation, et une contre-fiche (102) adaptée au connecteur à fiches (14) du module de base (1), l'entrée (103) du régulateur de charge (104) étant reliée avec les contacts (102c, 102d) de la contre-fiche (102) qui peuvent être reliés par la réalisation de la connexion à fiches avec la sortie (11a, 11b) de la partie de réseau (8) du module de base (1), un pôle de la borne de la batterie d'alimentation (106) étant relié avec l'un de ces contacts (102c), et l'autre pôle de la borne de la batterie d'alimentation (106) étant relié avec le contact (102a) de la contre-fiche (102) qui peut être relié par la réalisation de la connexion à fiches avec le pôle sorti (9b) des bornes d'abonné parallèles (9).

16. Module d'extension selon la revendication 15, **caractérisé en ce qu'**au moins l'un des pôles de la borne de la batterie d'alimentation (106) est relié par le biais d'un commutateur (107a, 107b) avec le contact (102a) lui afférent de la contre-fiche (102) et le commutateur (107a, 107b) se ferme automatiquement en cas d'augmentation de la tension à la borne de la batterie d'alimentation (106) au-delà d'un seuil prédéterminé et se ferme en cas de diminution de cette tension en dessous d'un seuil prédéterminé.

17. Module d'extension selon l'une quelconque des revendications 15 ou 16, **caractérisé en ce qu'**il présente un convertisseur continu-continu (115) augmentant la tension, dont l'entrée (116) est reliée avec une borne (117) pour une source de tension continue externe et dont la sortie (118) est montée parallèlement à la sortie (105) du régulateur de charge (104).

18. Module d'extension selon l'une quelconque des revendications 15 à 17, **caractérisé en ce qu'**il présente un régulateur solaire (119) dont l'entrée (120) est reliée avec une borne (121) pour au moins un module externe de cellules solaires et dont la sortie (122) est montée parallèlement à la sortie (105) du régulateur de charge (104).

19. Module d'extension selon l'une quelconque des revendications 15 à 18, **caractérisé en ce qu'**une sortie de signal (109) du régulateur de charge (105) est reliée avec le contact (102e) de la contre-fiche (102) qui peut être relié par la réalisation de la connexion à fiches avec l'entrée du régulateur (17) de la partie de réseau (8), et **en ce que** le régulateur de charge (105), pendant le fonctionnement, émet par le biais de cette connexion un signal à la partie de réseau (8) qui règle sa tension de sortie.

20. Module d'extension selon l'une quelconque des revendications 15 à 19, **caractérisé en ce qu'**il présente un système électronique de commande (110) et au moins une borne (112) reliée avec le système électronique de commande (110) pour un capteur de température, le système électronique de commande (110) commandant la tension de sortie et/ou le courant de sortie du régulateur de charge (105) ou du convertisseur continu-continu (115) en fonction de la température de la batterie et/ou de la température de d'alimentation électrique (1, 100) et/ou du temps.

21. Module d'extension selon la revendication 20, **caractérisé en ce que** le système électronique de commande (110) règle directement la tension de sortie de la partie de réseau (8) du module de base (1) en fonction d'une valeur de consigne de la tension de sortie et/ou du courant de sortie du régulateur de charge (105) au moyen d'au moins une conduite (124, 20) guidée par le biais de la contre-fiche (102) et du connecteur à fiches (14).

22. Module d'extension selon l'une quelconque des revendications 20 ou 21, **caractérisé en ce qu'**il présente une interface (122) pour le raccordement d'un bus de données externe au système électronique de commande (110).

23. Module d'extension selon la revendication 22, **caractérisé en ce qu'**il présente des bornes (113) reliées avec le système électronique de commande (110) pour des capteurs supplémentaires dont des signaux peuvent être exploités par le système électronique de commande (110) et émis comme données de mesure correspondantes par l'interface (122).
